# EUROPEAN PATENT APPLICATION

(11) **EP 4 728 934 A1**
(43) Date of publication of application: **22.04.2026**
(21) Application number: 25209585.6
(22) Date of filing: 17.10.2025
(51) Int. Cl.: A47D 13/02

(54) **CHILD CARRIER SYSTEM**

(30) Priority: 18.10.2024 US 202463708996 P; 13.01.2025 US 202563744590 P; 29.09.2025 US 202563889657 P
(71) Applicant: Wonderland Switzerland AG, 6312 Steinhausen (CH)
(72) Inventor: YEH, I-Ping, 6312 Steinhausen (CH); CHENG, Yu-Hsuan, 6312 Steinhausen (CH); CHUNG, Chu-Hua, 6312 Steinhausen (CH); SHELDRICK, Jennifer E., 6312 Steinhausen (CH); BERKEY, Cindy, 6312 Steinhausen (CH); REPPERT, Cindy, 6312 Steinhausen (CH)
(74) Representative: Boult Wade Tennant LLP

(57) **Abstract**

A child carrier system includes a child carrier having a carrying harness for connecting the child carrier to a caregiver's body and a cover attachable to the child carrier. The cover includes a first coupling mechanism proximate a first lateral side of the cover and a second coupling mechanism proximate a second lateral side of the cover. Each of the first coupling mechanism and the second coupling mechanism is extendable about a portion of the child carrier to attach the cover to the child carrier.

## Description

### FIELD

Exemplary embodiments pertain to the art of baby carriers and outerwear, in particular an attachable cover for a baby carrier.

### BACKGROUND

Baby carriers on a harness, sling, backpack, or the like provide a convenient way for a parent to support and transport a child while keeping the parent's hands free. However, an adult coat may not be large enough to wrap around the baby to keep them warm. A baby coat or bunting may be cumbersome to use in combination with the baby carrier.

### BRIEF DESCRIPTION

According to an embodiment, a child carrier system includes a child carrier having a carrying harness for connecting the child carrier to a caregiver's body and a cover attachable to the child carrier. The cover includes a first coupling mechanism proximate a first lateral side of the cover and a second coupling mechanism proximate a second lateral side of the cover. Each of the first coupling mechanism and the second coupling mechanism is extendable about a portion of the child carrier to attach the cover to the child carrier.

In addition to one or more of the features described above, or as an alternative, in further embodiments the first coupling mechanism and the second coupling mechanism are extendable about the carrying harness of the child carrier to attach the cover to the child carrier.

In addition to one or more of the features described above, or as an alternative, in further embodiments each of the first coupling mechanism and the second coupling mechanism includes a receiver and an attachment member removably connectable to the receiver.

In addition to one or more of the features described above, or as an alternative, in further embodiments the attachment member is connected to the cover by an extension member and the receiver is located at a position about the cover remote from the attachment member.

In addition to one or more of the features described above, or as an alternative, in further embodiments the extension member has a horizontal orientation when the attachment member is coupled to the receiver.

In addition to one or more of the features described above, or as an alternative, in further embodiments the extension member has a vertical orientation when the attachment member is coupled to the receiver.

In addition to one or more of the features described above, or as an alternative, in further embodiments an opening is defined between a body of the cover and the extension member when the attachment member is coupled to the receiver. The child carrier is positionable within the opening.

In addition to one or more of the features described above, or as an alternative, in further embodiments the carrying harness includes at least one shoulder strap, the at least one shoulder strap being positionable within the opening.

In addition to one or more of the features described above, or as an alternative, in further embodiments the carrying harness includes at least one shoulder strap and the child carrier includes a child supporting part having a neck support portion, a torso support portion, and a hip support portion. The at least one shoulder strap is connectable to the child supporting part.

In addition to one or more of the features described above, or as an alternative, in further embodiments at least one of the first coupling mechanism and the second coupling mechanism is extendable about the at least one shoulder strap at a location proximate the torso support portion to attach the cover to the child carrier.

In addition to one or more of the features described above, or as an alternative, in further embodiments at least one of the first coupling mechanism and the second coupling mechanism is extendable about the at least one shoulder strap at a location proximate the neck support portion to attach the cover to the child carrier.

In addition to one or more of the features described above, or as an alternative, in further embodiments the cover includes a back and a front connected by the first lateral side and the second lateral side. The first coupling mechanism is arranged at an inward facing surface of the first lateral side, proximate an upper end of the back, and the second coupling mechanism being arranged at an inward facing surface of the second lateral side, proximate the upper end of the back.

In addition to one or more of the features described above, or as an alternative, in further embodiments the cover includes a back and a front connected by the first lateral side and the second lateral side. The first coupling mechanism being arranged at an inward facing surface of the first lateral side, proximate an upper end of the front, and the second coupling mechanism being arranged at an inward facing surface of the second lateral side, proximate the upper end of the front.

In addition to one or more of the features described above, or as an alternative, in further embodiments a third coupling mechanism and a fourth coupling mechanism are operable to couple the cover to the child carrier. The third coupling mechanism is located proximate the first coupling mechanism and the fourth coupling mechanism is located proximate the second coupling mechanism.

In addition to one or more of the features described above, or as an alternative, in further embodiments the third coupling mechanism is arranged at an inward facing surface of the first lateral side, proximate an upper end of the back, and the fourth coupling mechanism is arranged at an inward facing surface of the second lateral side, proximate the upper end of the back.

In addition to one or more of the features described above, or as an alternative, in further embodiments the first coupling mechanism and the second coupling mechanism are connectable to the carrying harness at a first location and the third coupling mechanism and the fourth coupling mechanism are connectable to the carrying harness at a location remote from the first location.

In addition to one or more of the features described above, or as an alternative, in further embodiments the cover includes a storage pocket.

In addition to one or more of the features described above, or as an alternative, in further embodiments the cover includes a pocket having at least one opening arranged at a back of the cover for receiving a caregiver's hand.

In addition to one or more of the features described above, or as an alternative, in further embodiments the cover includes a body formed from an insulative material, the body having a hollow interior, and the child carrier being positionable within the hollow interior.

According to an embodiment, a child supporting system includes a child supporting device including a child receiving area and a cover including a coupling mechanism operable to removably connect the cover to the child supporting device at a position in overlapping arrangement with the child receiving area.

In addition to one or more of the features described above, or as an alternative, in further embodiments the child supporting device is a child carrier wearable by a caregiver.

In addition to one or more of the features described above, or as an alternative, in further embodiments the child supporting device is a child seat.

In addition to one or more of the features described above, or as an alternative, in further embodiments the child supporting device is a stroller.

In addition to one or more of the features described above, or as an alternative, in further embodiments the coupling mechanism is operable to removably connect the cover to a frame of the stroller.

In addition to one or more of the features described above, or as an alternative, in further embodiments the cover is removably connectable to at least one of the handle and a leg assembly of the stroller via the coupling mechanism.

In addition to one or more of the features described above, or as an alternative, in further embodiments the coupling mechanism is arranged at an upper end of the cover, the coupling mechanism includes an attachment member arranged at a first lateral side of the cover and a receiver arranged at a second lateral side of the cover. The attachment member is connectable to the receiver.

In addition to one or more of the features described above, or as an alternative, in further embodiments the attachment member is coupled to a first webbing portion and the receiving is coupled to a second webbing portion. The attachment member being connectable to the receiver at a location spaced from a body of the cover.

In addition to one or more of the features described above, or as an alternative, in further embodiments the first webbing portion and the second webbing portion are integrally formed.

In addition to one or more of the features described above, or as an alternative, in further embodiments a bottom end of the cover includes a hem containing an elastic material.

In addition to one or more of the features described above, or as an alternative, in further embodiments the cover includes a closable storage pocket.

In addition to one or more of the features described above, or as an alternative, in further embodiments the closable storage pocket is removably connectable to an inward facing surface of the cover.

In addition to one or more of the features described above, or as an alternative, in further embodiments the cover includes a pocket having at least one opening arranged at a back of the cover for receiving a caregiver's hand.

### BRIEF DESCRIPTION OF THE DRAWINGS

The following descriptions should not be considered limiting in any way. With reference to the accompanying drawings, like elements are numbered alike:
FIG. 1A is a perspective front view of a child carrier installed about a caregiver body according to an embodiment;
FIG. 1B is perspective side view of the child carrier of FIG. 1A according to an embodiment;
FIG. 1C is a rear view of the child carrier of FIG. 1A according to an embodiment;
FIG. 1D is a perspective view of the child carrier of FIG 1A in an unattached configuration according to an embodiment;
FIG. 2A is a perspective view of a cover according to an embodiment;
FIG. 2B is a detailed perspective view of a back of the cover according to an embodiment;
FIG. 3 is a front view of the cover according to an embodiment;
FIG. 4A is a cross-sectional view of a panel of material of the cover according to an embodiment;
FIG. 4B is a cross-sectional view of a panel of material of the cover according to another embodiment;
FIG. 5A is a front perspective view of a cover having a plurality of coupling mechanisms, at least some of which are in an uncoupled configuration according to an embodiment;
FIG. 5B is a front perspective view of the cover of FIG. 5A with each of the plurality of coupling mechanisms in a coupled configuration according to an embodiment;
FIG. 6A is a detailed view of an upper coupling mechanism and a side coupling mechanism of the cover according to an embodiment;
FIG. 6B is a detailed view of the upper coupling mechanism and the side coupling mechanism of FIG. 6A in a closed configuration according to an embodiment;
FIG. 7 is a side perspective view of the cover according to an embodiment;
FIG. 8 is a bottom perspective view of the cover of FIG. 7 according to an embodiment;
FIG. 9 is a front perspective view of the cover of FIG. 7 with the hood removed according to an embodiment;
FIG. 10 is a detailed view of an upper coupling mechanism and a side coupling mechanism of the cover in an uncoupled configuration according to an embodiment;
FIG. 11A is a back perspective view of the cover installed about a child carrier according to an embodiment;

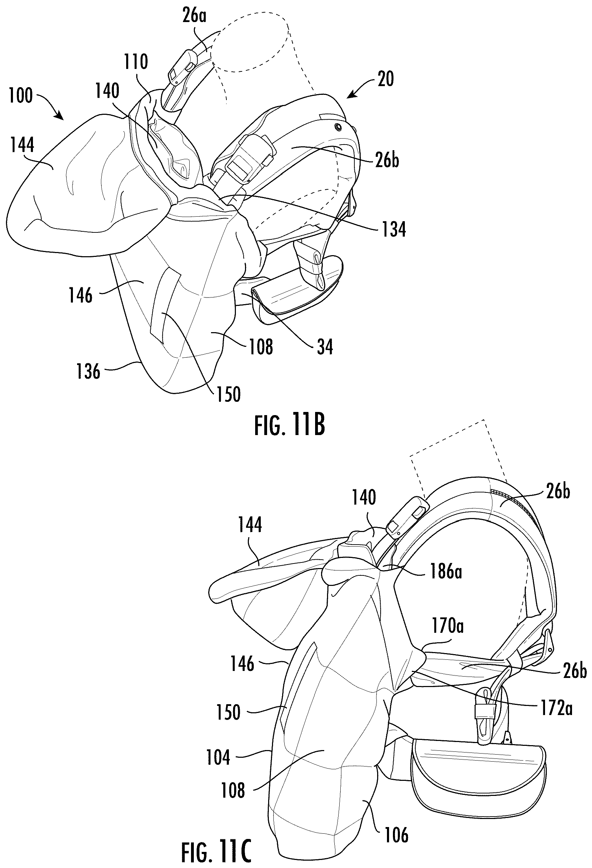

FIG. 11B is a top perspective view of the cover installed about a child carrier of FIG. 11A according to an embodiment;
FIG. 11C is a side perspective view of the cover installed about a child carrier of FIG. 11A according to an embodiment;

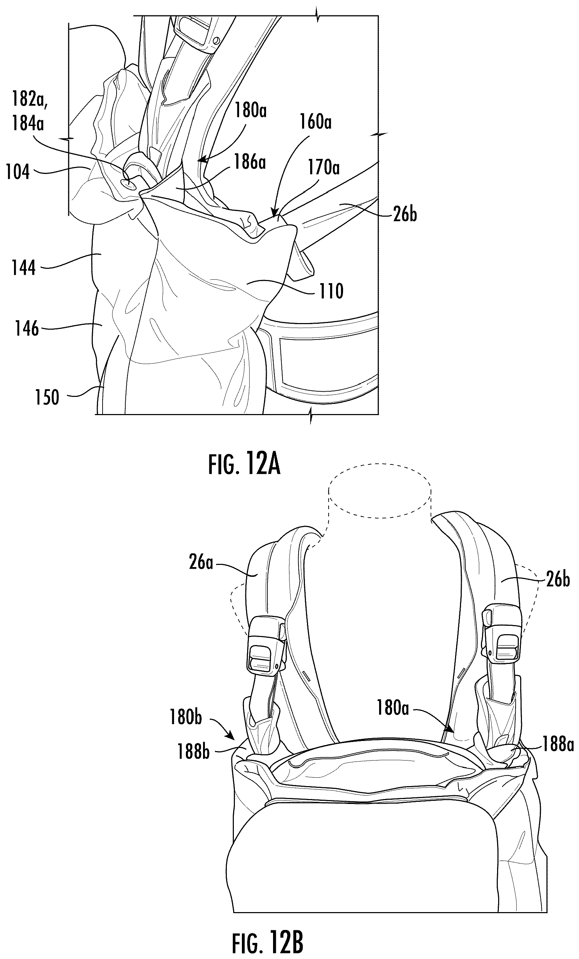

FIG. 12A is a detailed side view of the cover of FIG. 11C installed about a child carrier according to an embodiment;
FIG. 12B is a detailed front view of the cover of FIG. 11A installed about a child carrier of FIG. 11A according to an embodiment;
FIG. 13A is a back view of a cover of a child supporting system according to another embodiment;
FIG. 13B is a front view of the cover of FIG. 13A according to an embodiment;
FIG. 14 is a schematic diagram of a panel of material of the cover of FIGS. 13A-13B according to an embodiment;
FIG. 15 is a schematic diagram of a pocket of the cover of FIGS. 13A-13B according to an embodiment;
FIG. 16A is a left perspective view of the cover installed about a child carrier according to an embodiment;
FIG. 16B is a right perspective view of the cover of FIG. 16A installed about a child carrier according to an embodiment;
FIG. 16C is a front view of the cover of FIGS. 16A and 16B installed about a child carrier according to an embodiment;
FIG. 17A is a front view of a cover installed about a child supporting device according to an embodiment;
FIG. 17B is a left perspective view of the cover of FIG. 17A installed about a child supporting device according to an embodiment; and
FIG. 17C is a right view of the of the cover of FIG. 17A installed about a child supporting device according to an embodiment.

### DETAILED DESCRIPTION

A detailed description of one or more embodiments of the disclosed apparatus and method are presented herein by way of exemplification and not limitation with reference to the Figures.

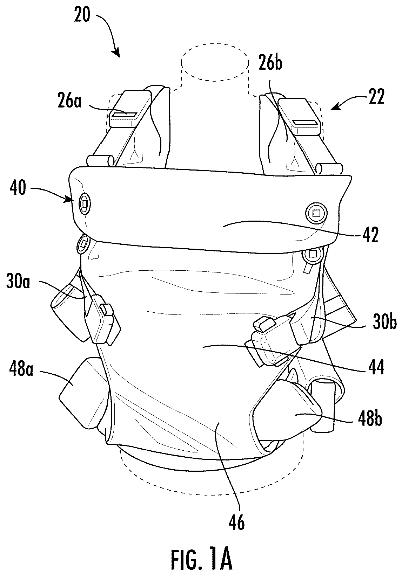

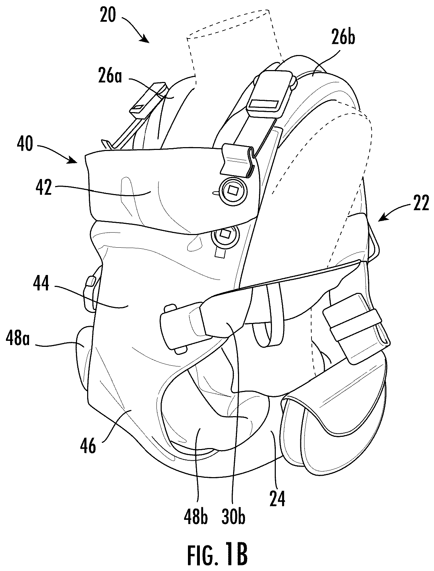

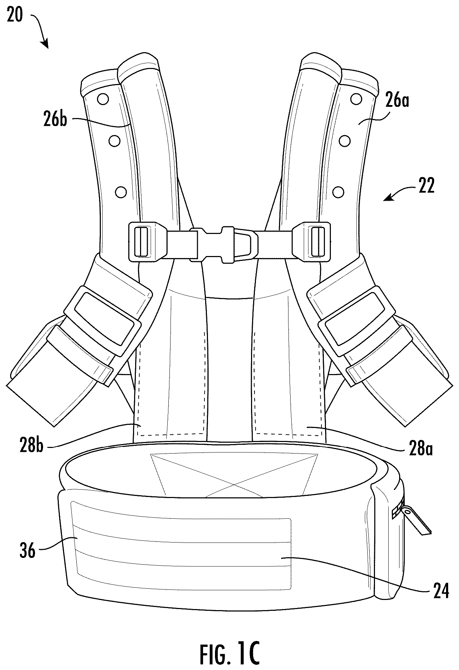

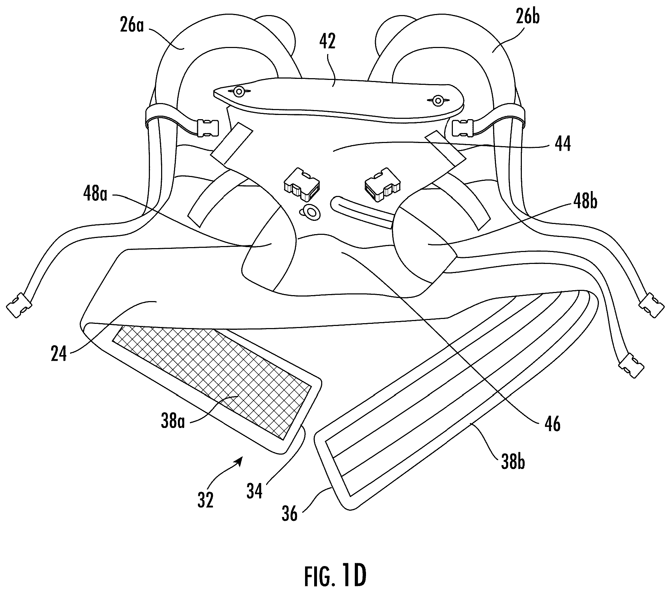

With reference to FIGS. 1A-1D, an example of a child carrier 20 suitable for carrying and transporting a child close to a caregiver's body is illustrated. The child carrier 20 is wearable by a caregiver and may include a carrying harness 22 attachable to the caregiver's body. In the illustrated, non-limiting embodiment, the carrying harness 22 includes a waist strap 24 and at least one shoulder strap (shown herein as two shoulder straps 26a, 26b). As shown, each of the shoulder straps 26a, 26b may have a fixed end 28a, 28b (see FIG. 1C) connected to the waist strap 24 and a distal end 30a, 30b detachably fastenable to the waist strap 24 or to a child supporting part 40 (to be described in more detail below). The waist strap 24 may include an attachment system 32 for fastening or unfastening the waist strap 24 about a caregiver's waist. The attachment system 32 may include two complementary fastening parts 38a, 38b provided on opposite ends 34, 36 of the waist strap 24 that are repeatedly removably couplable to one another. In an embodiment, the fastening parts 38a, 38b include hook and loop fasteners. However, an attachment system 32 using any suitable type of fastening parts, such as snaps, buttons, or a zipper for example, is within the scope of the disclosure.

The child carrier 20 may additionally include a child supporting part 40 connected to the carrying harness 22. The child supporting part 40 may include flexible materials, such as fabrics, soft goods, and the like for example. The child supporting part 40 may be configured to include a neck support portion 42, a torso support portion 44, a hip support portion 46, and two thigh support portions 48a, 48b. In an embodiment, the hip support portion 46 is disposed between and is respectively connected with the waist strap 24 and the torso support portion 44. The two thigh support portions 48a, 48b are connected to the hip support portion 46, and may be respectively disposed transversally opposite to each other at a left and a right side of the hip support portion 46. In use, the hip support portion 46 and the two thigh support portions 48a, 48b may delimit, at least partially, a child receiving area that forms a seat for a child. The torso support portion 44 provides support for a torso of the child, and the neck support portion 42 is positionable adjacent to a child's neck to assist in supporting the child's head. As shown, the neck support portion 42 may be connected with a top of the torso support portion 44. It should be appreciated that the child carrier 20 illustrated and described herein is intended as an example only and that a wearable child carrier 20 having another configuration is also within the scope of the disclosure.

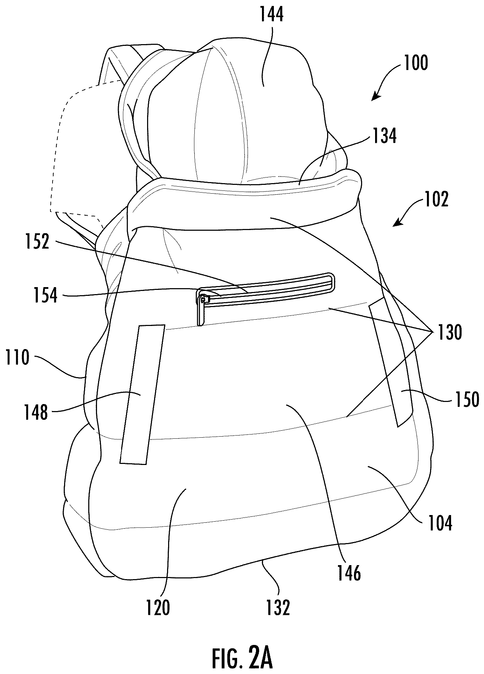

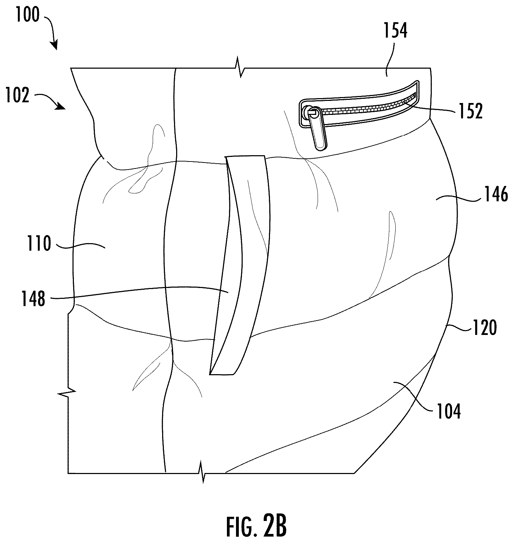

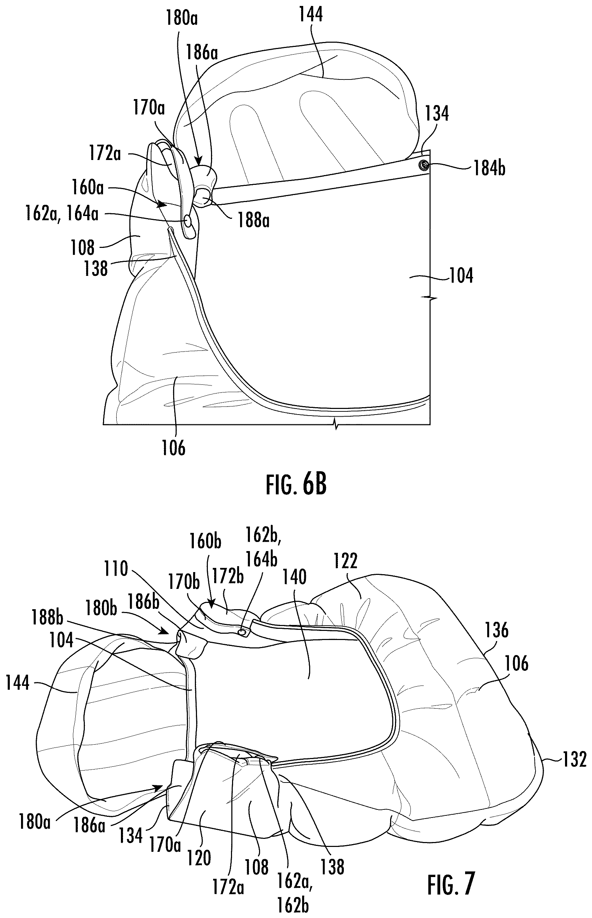

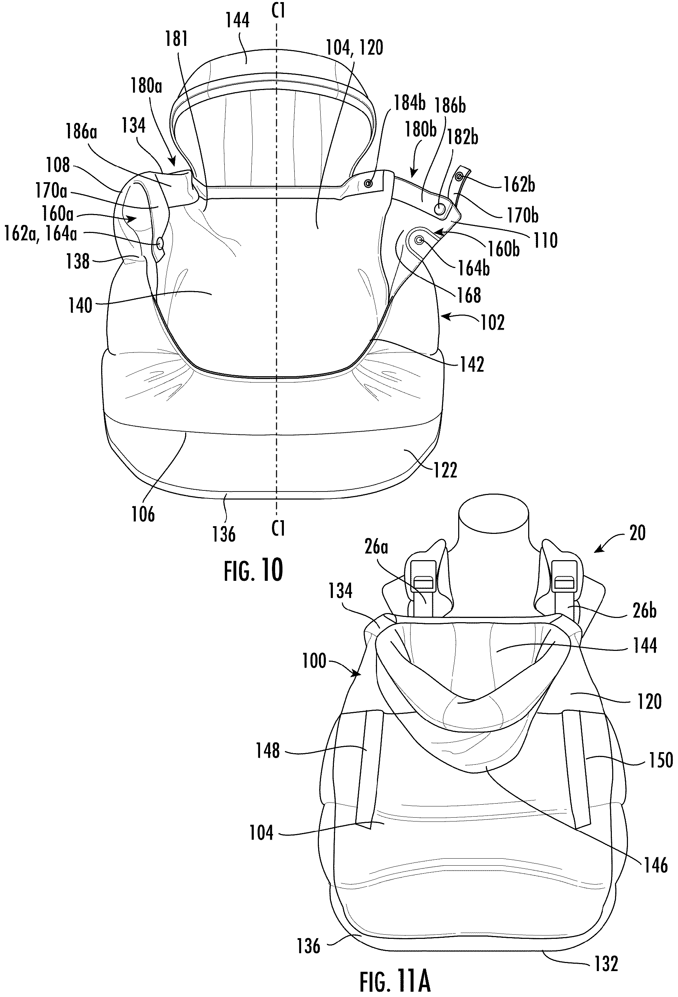

To use a child carrier, such as child carrier 20 for example, in cool temperatures, it may be desirable to place a cover about an exterior of the child carrier 20 similar to a jacket or coat, to provide additional warmth to a child seated therein. The cover and the child carrier in combination may form a child carrier system. With reference now to FIGS. 2A-10, an example of a cover 100 for use with a child carrier, such as the child carrier 20 of FIGS. 1A-1D, is illustrated in more detail. The cover 100 includes a body that may be formed from an insulative material. The body 102 generally includes a back 104, a front 106 arranged opposite the back 104, and a first lateral side 108 and second lateral side 110 extending between lateral ends of the back 104 and front 106, respectively. As shown, the body 102 may include one or more panels or sections of material. In an embodiment, the back 104 is formed from a first panel 120 of material, and the front 106 is formed by a separate, second panel 122 of material.

In some embodiments, at least one of the first lateral side 108 and the second lateral side 110 of the body may be integrally formed with the back 104 via a first panel 120 of material. In such instances, the first and second panels 120, 122 of material are affixed to one another. Although the first and second panels 120, 122 are illustrated as being directly connected, embodiments including additional panels of material are also contemplated herein. For example, embodiments where one or both of the first lateral side 108 and the second lateral side 110 are formed from separate panels of material than the back 104 and the front 106 are within the scope of the disclosure.

The plurality of panels 120, 122 of material that form the body 102 may be attached in any suitable manner, such as by stitching for example. However, other mechanisms for attaching panels of material are also contemplated herein. Further, it should be appreciated that in other embodiments, a single panel of material may be used to form the substantial entirety of the body 102.

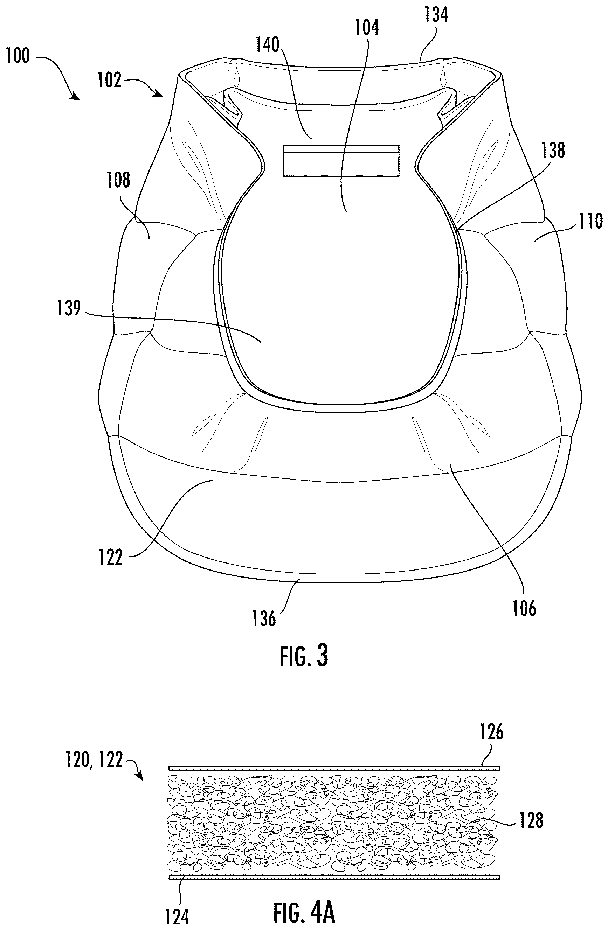

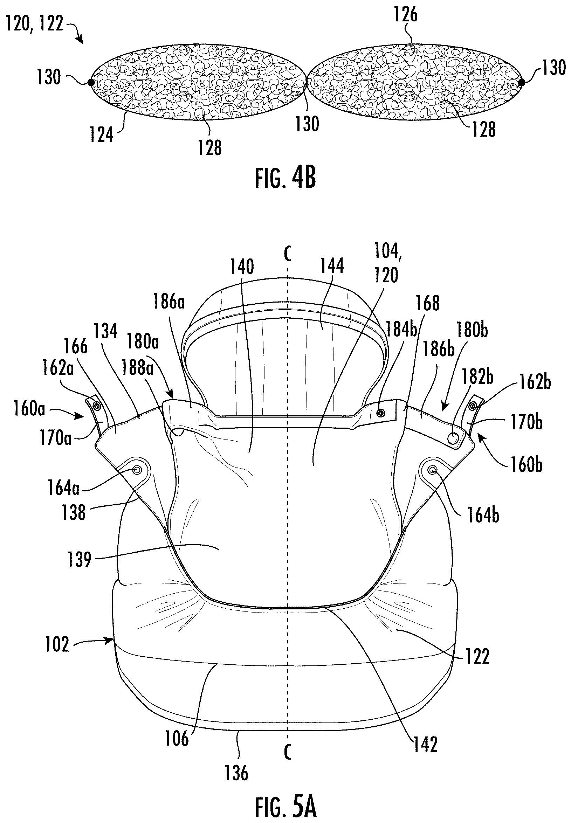

Each panel 120, 122 of material of the body 102 may include a single layer of material, or alternatively, may include a plurality of layers of material. For example, in the illustrated, non-limiting embodiment illustrated in FIGS. 4A and 4B, each panel 120, 122 of material includes a first layer of material 124, a second layer of material 126, and a third layer of material 128 positioned between the first layer of material 124 and the second layer of material 126. In such embodiments, the first layer of material 124 and the second layer of material 126 may be the same type of material or may be different materials. In instances where the first and second layers of material 124, 126 are the same type of material, the first and second layers of material 124, 126 may be formed by stacking separate pieces of the material and affixing them to one another, or alternatively, by folding a single piece of the material over onto itself. The first layer of material 124 may form a portion of an outer shell of the cover 100 and the second layer of material 126 may form a portion of an inner lining of the cover 100. In an embodiment, the first layer of material 124 is formed from a material having water resistant or water repellant properties and the second layer of material 126 is formed by a soft material, such as cotton or fleece for example. The third material 128 may be different than both the first material and the second material. In an embodiment, the third material may be an insulative material, such as down, feathers, or a synthetic fill for example. It should be understood that embodiments where a panel 120, 122 of material includes additional layers of material are also within the scope of the disclosure.

In an embodiment, the first and second layers of material 124, 126 within a panel 120, 122 have a same general size and shape such. The first and second layers of material 124, 126 may be stitched together or affixed in another manner, about an outer periphery of the panel to capture the third material 128 therebetween. In some embodiments, the first and second layers of material 124, 126 may be stitched together at intermediate locations of the panel 120, 122. For example, in the illustrated, non-limiting embodiment, a plurality of rows of stitching, identified at 130, extend horizontally across each panel 120, 122 of the body 102 such that a plurality of pockets of the third material 128 are defined between each pair of rows of stitching.

A configuration of the back 104 of the body 102 may be similar to or may be different than a configuration of the front 106 of the body. In the illustrated, non-limiting embodiment, a shape and of the back 104 is similar to a shape of the front 106. Further, the size of the front 106 may be similar to, or in some embodiments, may be different than the back 104. In an embodiment, a surface area of the back 104 is greater than a surface area of the front 106. As shown, the front 106 may be generally U-shaped, such that a length at the lateral sides of the front is greater than the length at a central portion of the front. As a result, a cutout 139 is formed at a central portion of the front 106.

A configuration of the first panel 120 of material that forms the back 104 of the body 102, such as a size and/or shape thereof for example, may be similar to or different than a configuration of the second panel 122 of material that forms the front 106 of the body 102. A width of the first panel 120 of material may be constant, or may vary over a length of the first panel 120 of material. In embodiments where the first panel 120 forms not only the back 104, but also the lateral sides 108, 110 of the body 102, the first panel 120 of material has a first width proximate a first, bottom end 132 thereof, and a second width proximate a second, upper end 134 thereof. In an embodiment, the second width at the upper end 134 may be greater than the first width at the bottom end 132. The width may gradually increase from the bottom end 132 over the length of the first panel 120 of material.

Similarly, a width of the second panel 122 of material may be constant or may vary over a length of the second panel 122 of material. In an embodiment, a first width at a first, bottom end 136 of the second panel 122 of material is different, for example greater, than a second width of the second panel 122 of material at an upper end 138 thereof. The width of the second panel 122 of material may gradually reduce over the height of the second panel 122 of material. In an embodiment, the second panel 122 of material is generally U-shaped (see the resultant cutout 139 discussed above) such that a length at the lateral sides of the second panel 122 is greater than the length at a central portion of the second panel 122 of material.

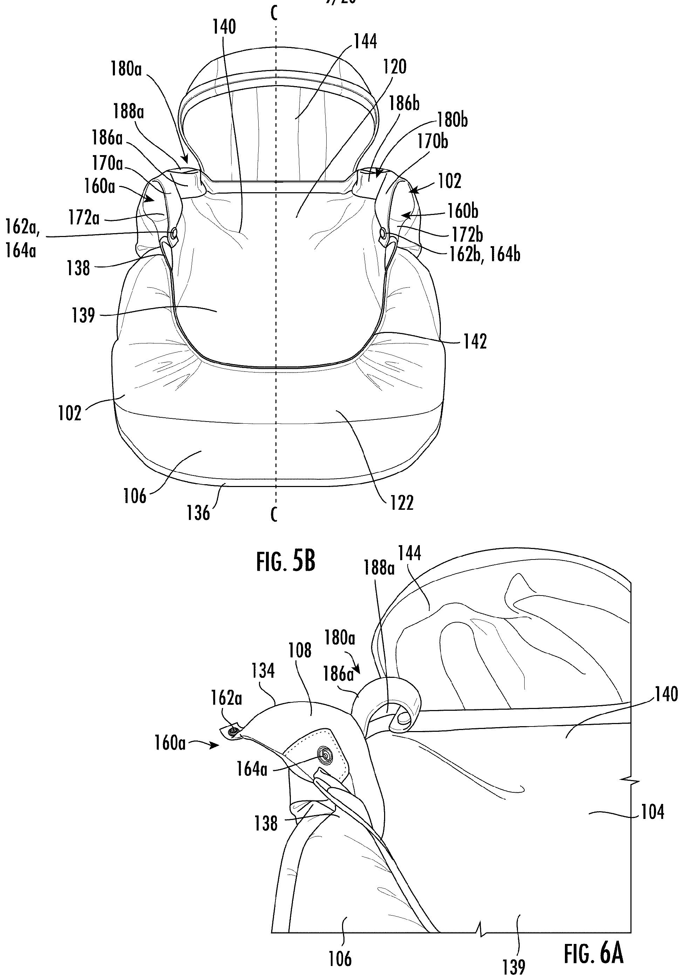

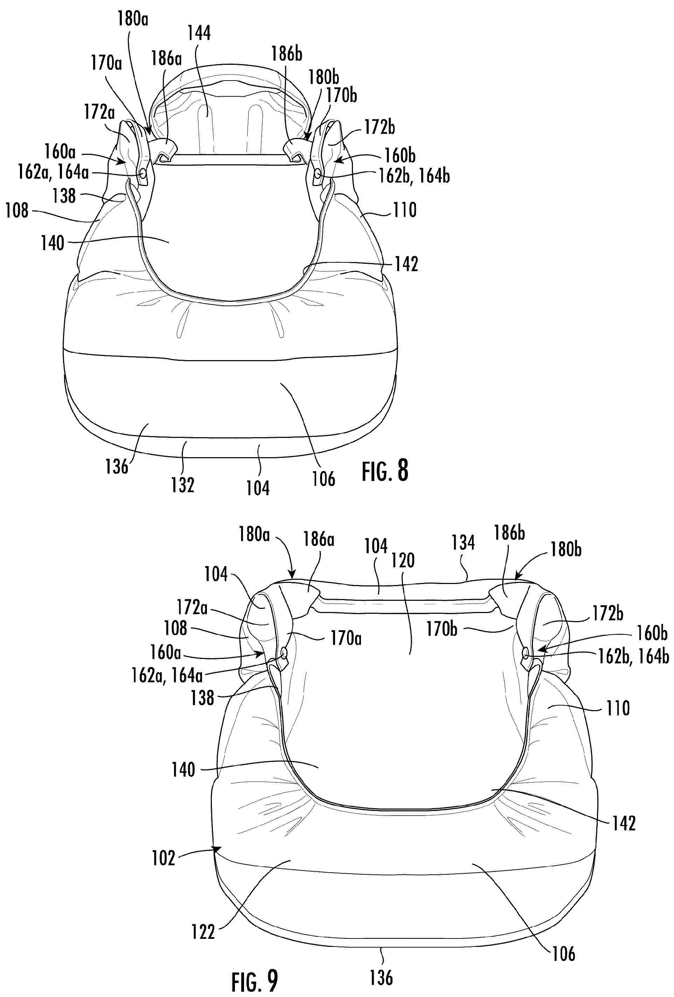

A length of the second panel 122 of material, measured between the bottom end 136 and the upper end 138, may be the same or may be different than the length of the first panel 120 of material, measured between the bottom end 132 and the upper end 134. As shown in FIGS. 5B and 9, the length of the second panel 122 of material may be less than the length of the first panel of material. The width of the back 104 formed by the first panel 120 of material may be equal to the width of the front 106 formed by the second panel 122 of material. In instances where lateral sides 108, 110 of the body are formed by the first panel 120 of material, the width of the first panel 120 of material extends beyond the width of the back 104 and front 106. In such embodiment, the difference between the width of the first panel 120 of material and the width of the second panel 122 of material may increase over the height of the body 102. This additional width of the first panel 120 of material extending beyond the width of the back 104 in a first to define a first lateral edge may form the first lateral side 108 of the body 102. Similarly, the additional width of the first panel 120 of material extending beyond the width of the back 104 in a second direction to define a second lateral edge forms the second lateral side 110 of the body 102. Accordingly, the bottom end 132 of the first panel 120 of material and the bottom end 136 of the second panel 122 of material may be stitched together, and the first lateral edge of the first panel 120 of material may be connected to a first lateral edge of the second panel 122 of material, and a second lateral edge of the first panel 120 of material may be connected to a first lateral edge of the second panel 122 of material.

The front 106, back 104, and lateral sides 108, 110 of the body 102, in combination, define a hollow interior pocket 140. Such a configuration of the cover 100 has an open end proximate the upper ends 134, 138 of the first and second panels 120, 122 of material. The interior pocket 140 may be sized to receive at least a portion of a child carrier therein. When the cover 100 is installed about the child carrier 20, the back 104 of the body 102 is positioned in overlapping arrangement with an outward facing surface of the child supporting portion 40 of the child carrier 20. In an embodiment, a length of the interior pocket 140 is greater than a length of the child supporting portion 40 such that the substantial entirety of the child supporting portion 40 and the legs of an occupant positioned within the child carrier 20 are receivable within the interior pocket 140. The front 106 of the body 102 is therefore positionable between the caregiver wearing the child carrier 20 and the legs of the child seated within the child carrier 20.

In an embodiment, an edge of the body 102 proximate the interior pocket 140 includes an elastic material, to position the child carrier 20 more easily within the interior pocket 140. As shown, the upper edge 142 of the front 106 may include an elastic material. In such embodiments, the elastic material may be stretched during installation of the body 102 about the child carrier 20 to facilitate positioning the bottom of the child carrier 20 and the legs of an occupant within the interior pocket 140. Further, forming the front 106 to include a cutout 139, may increase the ease at which the cover 100 is positioned about the child carrier 20.

As shown in FIGS. 2A, the cover 100 may include a hood 144 positionable to surround the head of the child seated within the child carrier. As shown, the hood 144 may be movably, for example pivotably, coupled to the body 102, such as to the back 104 of the body 102 proximate an upper end thereof. The hood 144 may be permanently connected to the body 102, or in some embodiments may be detachably connectable to the body 102, such as via a zipper, snaps, or another suitable coupling mechanism. Further, embodiments of the cover 100 that do not include a hood 144 are also within the scope of the disclosure. In embodiments including a hood 144, the hood 144 may be formed from one or more panels of material having a construction similar to or different from the first and second panels 120, 122 of material of the body 102.

With reference to FIG. 2A-2B and 5A-8, in some embodiments, one or more pockets may be formed at the back 104 of the cover 100. As shown, a pocket 146 may be generally centrally located about the back 104 and accessible via an exterior surface of the back 104. The pocket 146 may be formed by affixing an additional piece or panel of material (not shown) in overlapping arrangement with the back 104. In the illustrated, non-limiting embodiment, the pocket 146 is formed by positioning an additional panel of material in overlapping arrangement with an interior surface (not shown) of the back 104. However, embodiments where the additional panel of material is positioned at an exterior surface of the back 104 are also within the scope of the disclosure. The pocket 146 may be accessible via a first hole 148 and a second hole 150, spaced laterally apart from one another to form a generally horizontally oriented pocket extending therebetween. Such a pocket 146 that is accessible via holes 148, 150 formed at two opposite sides thereof is also known as a "kangaroo pocket" and is intended to receive one or both of a caregiver's hands. However, embodiments including two separate pockets, each intended to receive one of the caregiver's hands, are also within the scope of the disclosure.

Alternatively, or in addition to the pocket 146 for the caregiver's hands, the cover 100 may include a closable storage pocket 152. In the illustrated, non-limiting embodiment, the storage pocket 152 is located at the exterior of the back 104, such as at a location above the kangaroo pocket 146. It should be appreciated that embodiments where the storage pocket is located elsewhere about the cover, such as below the kangaroo pocket for example, are also contemplated herein. The closable storage pocket 152 may extend inwardly into the body 102 of the cover 100. As shown, the storage pocket 152 may be accessible via an opening formed at an exterior surface of the back 104 and may include a coupling mechanism 154, such as a zipper for example, to selectively open and access the interior of the storage pocket 152.

The cover 100 may include one or more coupling mechanisms operable to securely removably affix the cover 100 to the child carrier 20. As shown, the one or more coupling mechanisms may be located at or proximate the first lateral side 108 and the second lateral side 110 of the body 102. In the illustrated, non-limiting embodiment, the cover 100 includes a first side coupling mechanism and 160a a second side coupling mechanism 160b operable to couple the cover 100 to a first region or first location of the first shoulder strap 26a and the second shoulder strap 26b, respectively. As shown, the first region may be at or adjacent to the torso support portion 44 of the child carrier 20. Each of the first side coupling mechanism 160a and the second side coupling mechanism 160b includes an attachment member 162a, 162b and a receiver 164a, 164b. The first and second side coupling mechanisms 160a, 160b are illustrated as snaps, with the attachment member 162a, 162b including a socket of the snap and the receiver 164a, 164b being the stud of the snap, engageable with the socket. Embodiments where the snap and the socket are switched, and embodiments including another suitable coupling mechanisms, such as hook and loop fasteners, clasps, magnets, and zippers for example, are also within the scope of the disclosure.

The attachment member 162a of the first side coupling mechanism 160a may be arranged near the top of the first lateral side 108 proximate the front 106. Similarly, the attachment member 162b of the second side coupling mechanism 160b may be arranged near an upper end of the second lateral side 110 proximate the front 106. The complementary receivers 164a, 164b may be arranged generally in vertical alignment with a respective one of the attachment members 162a, 162b. As shown, the receiver 164a of the first side coupling mechanism 160a may be positioned at an inwardly facing surface 166 of the first lateral side 108 of the body 102, such as adjacent to the upper edge 142 of the front 106 at a first lateral end of the front 106. The receiver 164b of the second side coupling mechanism 160b may be positioned at an inward facing surface 168 of the second lateral side 110 of the body 102 adjacent to the upper edge 142 of the front 106 at a second lateral end thereof.

The attachment member 162a, 162b of each side coupling mechanism 160a, 160b may be mounted, such as stitched, adhered or mechanically fastened, to an extension member 170a, 170b formed from a strap or piece of webbing extending from the body 102 of the cover 100. The receiver 164a, 164b of each side coupling mechanism 160a, 160b may be affixed directly to a surface of the cover 100. However, embodiments where the attachment member 162a, 162b is directly attached to a surface of the body 102 and the receiver 164a, 164b is coupled to the body 102 via an extension member 170a, 107b are also contemplated herein. Further, it should be appreciated that in an embodiment, both the attachment member 162a, 162b and the receiver 164a, 164b may be connected to the body 102 of the cover 100 via a respective extension member.

When a respective attachment member 162a, 162b, and receiver 164a, 164b are engaged, the extension member 170a, 170b may have a generally vertical orientation. The extension member 170a, 170b in combination with the body 102, defines an opening 172a, 172b within which a portion of the child carrier 20 is receivable. In an embodiment, the first shoulder strap 26a (e.g., at distal end 30a) is receivable within the opening 172b of the second side coupling mechanism 160b, and the second shoulder strap 26b (e.g., at distal end 30b) is receivable within the opening 172a of the first side coupling mechanism 160a.

The cover 100 may alternatively or additionally include one or more upper coupling mechanisms 180a, 180b operable to couple the cover 100 to a second region or second location of the first shoulder strap 26a and the second shoulder strap 26b, respectively. In the illustrated, non-limit embodiment, the second region may be a portion of the shoulder straps 26a, 26b proximate the neck support portion 42 of the child supporting part 40. As shown, the cover 100 includes a first upper coupling mechanism 180a connectable to the second shoulder strap 26b proximate the neck support portion 42 and a second upper coupling mechanism 180b connectable to the first shoulder strap proximate 26a the neck support portion 42. Each of the first upper coupling mechanism 180a and the second upper coupling mechanism 18b includes an attachment member 182a, 182b and a receiver 184a, 184b. Although the first and second upper coupling mechanisms 180a, 180b are illustrated as snaps, other suitable coupling mechanisms include but are not limited to hook and loop fasteners, clasps, magnets, and zippers for example. Further, a configuration of an upper coupling mechanism 180a, 180b need not be the same as the configuration of a side coupling mechanism 160a, 160b at the same side, or at a different side of the cover 100.

In the illustrated, non-limiting embodiment, both the attachment member 182a, 182b and the receiver 184a, 184b of each upper coupling mechanism 180a, 180b are arranged at an upper end of the body 102. As shown, the attachment member 182a, 182b may be located proximate an interface between the back 104 and the first lateral side 108 of the body 102, and proximate an interface between the back 104 and the second lateral side 110 of the body 102, respectively. The receiver 184a, 184b of both the first and second upper coupling mechanisms 180a, 180b is arranged at an inner surface 181 of the back 104 of the body 102. The receiver 184b of the first upper coupling mechanism 180a is laterally spaced from the attachment member 182a of the first upper coupling mechanism 180a in a first direction such that receiver 184b is coupled to the body 102 at a location closer to a central axis C of the cover 100 than the location of the body 102 where the attachment member 182a is connected. Similarly, the receiver 184b of the second upper coupling mechanism 180b is laterally spaced from the attachment member 182b of the second upper coupling mechanism 180b in a second direction such that the connection between the receiver 184b and the body 102 is located closer to the central axis C of the cover 100 than the connection between the attachment member 182b and the body 102.

In the illustrated, non-limiting embodiment, the attachment member 182a, 182b of both the first upper coupling mechanism 180a and the second upper coupling mechanism 180b includes an extension member 186a, 186b, in the form of a strap or piece of webbing affixed to the body 102. The receiver 184a, 184b of each upper coupling mechanism 180a, 180b may be directly connected to the cover 100, as shown. When the attachment members 182a, 184a and receivers 182b, 184b are engaged, the extension members 186a, 186b may have a generally horizontal orientation and a corresponding opening 188a, 188b is defined between the inner surface 181 of the back 104 of the body 102 and each extension members 186a, 186b. However, embodiments where the attachment member 182a, 182b is affixed directly to a surface of the cover 100 and embodiments where the receiver 184a, 184b is coupled to the cover 100 via the extension member 186a, 186b are also contemplated herein. Further, it should be appreciated that in an embodiment, both the attachment member 182a, 182b and the receiver 184a, 184b may be connected to the body 102 of the cover 100 via a respective extension member.

As shown, the second shoulder strap 26b is positionable within the opening 188a of the first upper coupling mechanism 108a and the first shoulder strap 26a is receivable within the opening 188b of the second upper coupling mechanism 108b. Accordingly, four attachment points are provided for the cover 100 on to the carrier 20 when the first side coupling mechanism 160a and second side coupling mechanism 160b are also secured as discussed above. In another sense, the first and second upper coupling mechanisms 108a, 108b secure the cover 100 in front of and/or above the wearer's shoulders, and the first and second side coupling mechanisms 160a, 160b secure the cover 100 below the wearer's shoulders at sides of their torso.

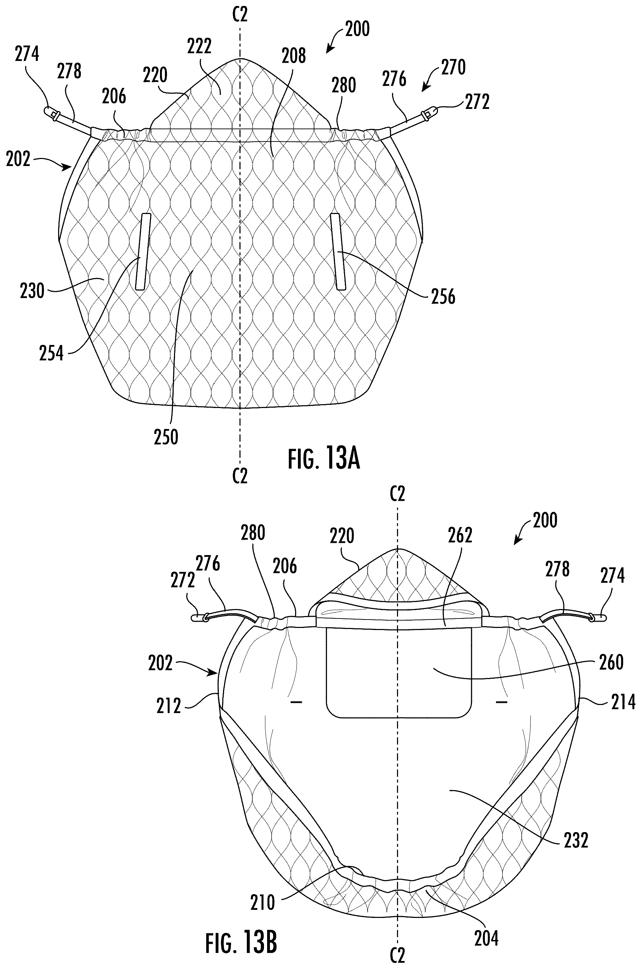

With reference now to FIGS. 13A-16C another embodiment of a cover 200 for use with a child supporting device, such as a child carrier 20 for example, is illustrated. It should be appreciated that the child supporting device and the cover 200, in combination, may form a child supporting system. As shown, the cover 200 includes a body 202 having a bottom end 204 and a top end 206. When the cover 200 is connected to a child supporting device, the cover 200 is positionable in overlapping arrangement with at least a portion of the child's body. Accordingly, a length of the body 202 of the cover 200 extending between the bottom end 204 and the top end 206 may be greater than a length of the child when arranged within the child supporting device.

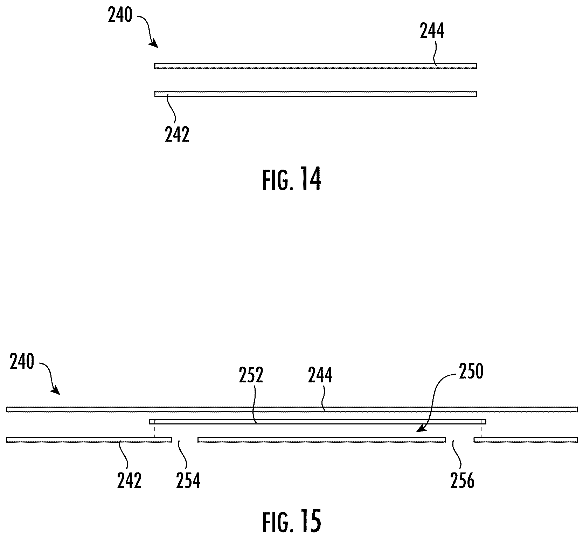

The cover 200 may include a hood 220 movable relative to the body 202 between an up configuration (FIG. 15B) in which the hood 220 is to a positionable about the head of the child seated within the child supporting device and a down configuration (FIG. 15A) in which the hood 220 is not arranged about a head of a child seated within the child supporting device. In the up configuration, a back surface 222 of the hood 220 may be generally parallel to an adjacent surface of the body 202, such as the surface 208 of the cover 200 aligned with the child's back for example. In the down configuration, the back surface 222 of the hood 220 may be arranged at an angle relative to the adjacent surface 208 of the body 202. The hood 220 may be permanently connected to the body 202, or in some embodiments may be detachably connectable to the body 202, such as via a zipper, snaps, or another suitable coupling mechanism. Further, embodiments of the cover 200 that do not include a hood 220 are also within the scope of the disclosure.

A lower hem 210 may be formed at the bottom end 204 of the body 202. The hem 210 may span a width of the body 202, between a first lateral side 212 of the body 202 and a second lateral side 214 of the body 202. In an embodiment, an elastic material (not shown) transformable between a contracted or neutral configuration (FIG. 13B) and an extended configuration, is contained within the hem 210 and is affixed to both the first lateral side 212 and the second lateral side 214 of the body 202. A length of the elastic material, measured along an axis extending between the first lateral side 212 and the second lateral side 214 of the body 202, is greater in the stretched configuration than in the contracted configuration. The elastic material may be in the stretched configuration when initially attached to both the first lateral side 212 and the second lateral side 214. As a result, the first and second lateral sides 212, 214 at the bottom end 204 of the body 202 are pulled towards a central axis C2 when the elastic material is in the contracted configuration. Further, such a configuration may pull the bottom end 204 of the body 202 upwardly, creating a fold near the bottom of the body 202 as shown in FIG. 13B.

As in the embodiment illustrated in FIGS. 13A-13B, the body 202 may include an outer shell 230 and an inner lining 232, and may be formed an insulative material, such as from one or more panels of such a material. Although the body 202 is generally illustrated as being formed from a single panel of material 240, embodiments where the body 202 is formed via a plurality of panels of material connected to one another are also contemplated herein. In such embodiments, a configuration of each of the plurality of panels may be similar or may be different.

Each panel of material 240 may be a single layer, or alternatively, may include a plurality of layers. An example of a panel of material 240 of the body 202 is illustrated in more detail in FIG. 14. In the illustrated, non-limiting embodiment, the one or more panels 240 of material that form the body 202 include a first layer of material 242 that defines a portion of the outer shell 230 of the cover 200 and a second layer of material 244 that defines a portion of the inner lining 232 of the cover 200. The first and second layers of material 242, 244 may be connected to one another, and in some embodiments, one or more additional layers of material (not shown) may be positioned between the first layer 242 and the second layer 244.

The cover 200 may include one or more pockets. As shown, a pocket 250 may be generally centrally located about the body 202 and may be accessible via the outer shell 230 thereof. The pocket 250 may be formed by affixing an additional piece or panel of material 252 in overlapping arrangement with an adjacent portion of the body 202. In the illustrated, non-limiting embodiment, the pocket 250 is formed by positioning an additional panel of material 252 in overlapping arrangement with the first layer of material 242 of a panel 240 of the body 202, such as between the first layer 242 and the second layer 244 for example. However, embodiments where a pocket 250 is formed by positioning an additional panel of material at an exterior surface of the outer shell 230 is also within the scope of the disclosure. As shown, the pocket 250 may be accessible via a first hole 254 and a second hole 256 spaced laterally apart from one another to form a generally horizontally oriented pocket. In such embodiments, the additional panel of material 252 may be attached to the first layer of material 242 that forms the outer shell 230 at a location directly adjacent each opening 254, 256. However, embodiments including a pocket 250 intended to receive a single hand of the caregiver and embodiments including two separate pockets, each intended to receive one of the caregiver's hands, are also within the scope of the disclosure.

Alternatively, or in addition to the pocket 250 for the caregiver's hands, the cover 200 may include a closable storage pocket or pouch 260. In the illustrated, non-limiting embodiment, the storage pouch 260 is arranged at the inner lining 232 of the cover 200, such as at a central location, near the upper end 206 of the body 202 for example. It should be appreciated that embodiments where the storage pouch 260 is located elsewhere about the cover 200 are also contemplated herein. The storage pouch 260 may be permanently attached to the body 202 of the cover 200, or in other embodiments, the storage pouch 260 may be removably connectable to the body 202. For example, the storage pouch 260 may be attachable to the body 202 via a coupling mechanism (not shown), such as hook and loop fasteners or snaps. The closable storage pouch 260 may extend inwardly into an interior of a panel of material 240 of the body 202, such as between the outer shell 230 and the inner lining 232 of the body 202 for example. In other embodiments, the storage pouch 260, in its entirety, is arranged at an exposed surface of the inner lining 232 of the body 202, opposite the outer shell 230. The storage pouch 260 may have a hollow interior accessible via an open end 262. The open end 262 may be selectively sealable by a coupling mechanism (not shown), such as by a zipper, magnets, hook and loops fasteners, or another suitable mechanism for example.

The cover 200 as illustrated and described herein may be positionable about a child carrier, similar to child carrier 20 for example. The cover 200 may include a coupling mechanism 270 arranged at or proximate the top end 206 of the body 202. As shown, the coupling mechanism 270 includes an attachment member 272 located proximate the first lateral side 212 of the body 202 and a receiver 274 located near the second, opposite lateral side 214 of the body 202. In the illustrated, non-limiting embodiment, the attachment member 272 is connected to a first webbing portion 276 extending laterally from the body 202 in a first direction and the receiver 274 is coupled to a second webbing portion 278 extending laterally from the body 202 in a second, opposite direction. The first webbing portion 276 and/or the second webbing portion 278 may be connected to or affixed to the body 202. It should be appreciated that embodiments including only one of the first webbing portion 276 and the second webbing portion 278 and embodiments where the attachment member 272 and the receiver 274 are affixed directly to the body 202 and therefore the coupling mechanism 270 does not include a webbing portion 276, 278 are also within the scope of the disclosure. The first webbing portion 276 and the second webbing portion 278 may be separate straps or pieces of webbing, or alternatively, may be integrally formed as a single piece of webbing having a length greater than a width of the body 202 at the upper end 206 thereof. In some embodiments, a hem 280 is formed at the upper end 206 of the body 202 and a piece of webbing forming both the first webbing portion 276 and the second webbing portion 278 is positioned within the hem 280.

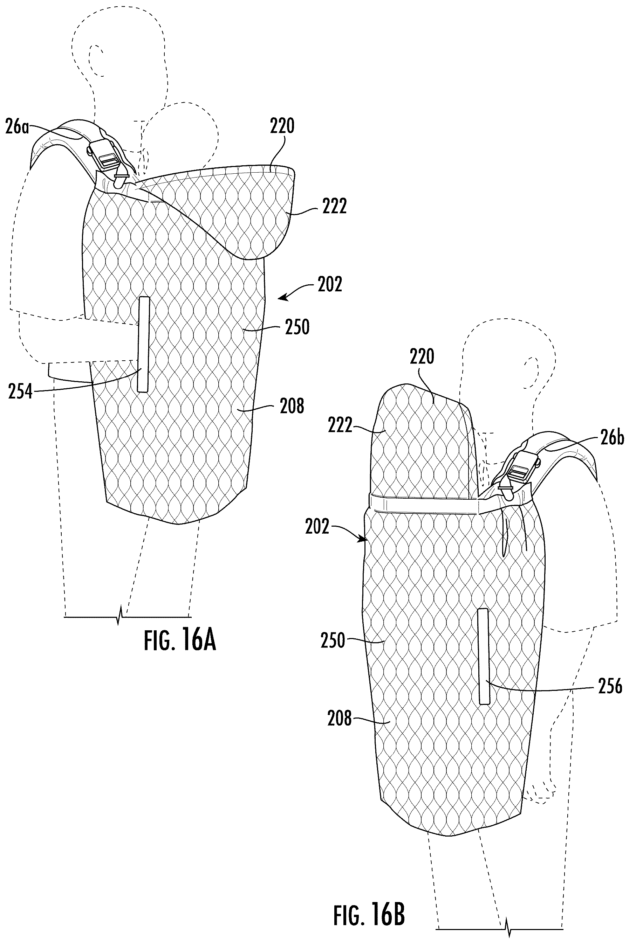

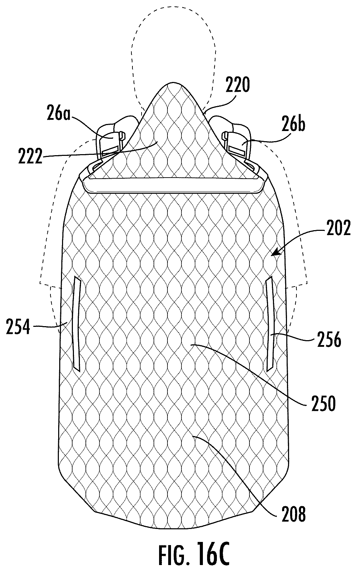

With reference to FIGS. 16A-16C, the attachment member 272 is configured to wrap around a portion of the child carrier 20 and connect to the 274 receiver to attach the cover 200 to the child carrier 20. In the illsutated, non-limiting embodiment, the first webbing portion 276 is extendable to a position behind the second shoulder strap 26b, such as between the caregiver and the second shoulder strap 26b and the second webbing portion 278 is positionable behind the first shoulder strap 26a, between the first shoulder strap 26a and the body of the caregiver. With one or more of the webbing portions 276, 278 extending between the shoulder straps 26a, 26b and the caregiver, the attachment member 272 is connectable to the receiver 274, thereby coupling the cover 200 to the child carrier 20 via the shoulder straps 26a, 26b. The elasticized lower hem 210 may be positionable over a portion of the child carrier 20 to further secure the cover 200 and restrict movement of the cover from the child carrier 20 during use.

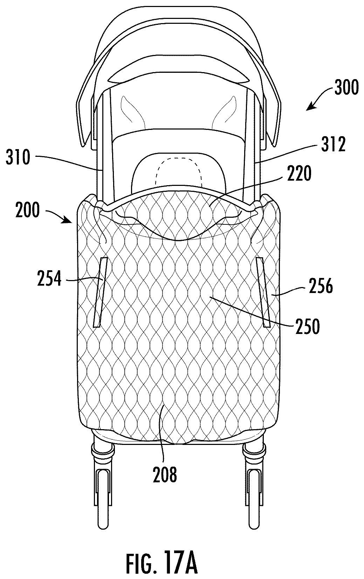

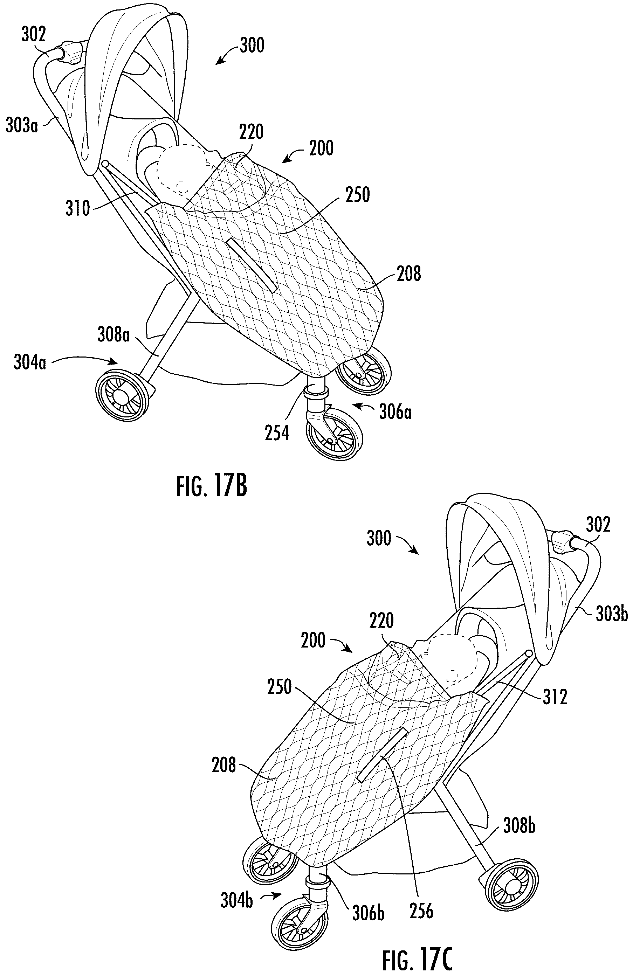

In other embodiments, such as shown in FIGS. 17A-17C, the cover 200 is suitable for use with other types of child supporting devices and is positionable in overlapping arrangement with a child receiving area of such child supporting device. For example, the cover 200 is suitable for use with a child seat, such as an infant car seat and a rumble seat when attached to a stroller 300. In embodiments including a stroller 300, the stroller 300 may include a frame such as having a handle 302 including first and second side rails 303a, 303b and/or one or more leg assemblies 304a, 304b, each including a respective front leg 306a, 306 and a rear leg 308a, 308b. The child supporting device 300 includes a child receiving area, such as defined by the child seat connected to the frame of the stroller 300, in which the child may be located. In such embodiments, the coupling mechanism 270 may extend about a portion of the child seat, such as one or more sides 310, 312 of a frame of the child seat for example. Alternatively, or additionally, the coupling mechanism 270 may extend about a portion of the stroller 300 to couple the cover 200 to the child seat or stroller 300 at a position overlapping the body of the child. When the cover 200 is used in combination with a child in a child seat, the child may be facing toward the outer shell 230, such as with the hood 220 located below the child's face.

A cover 100, 200 as described herein enhances the use of a child supporting device, such as a child carrier 20 for example, in cold weather conditions.

The term "about" is intended to include the degree of error associated with measurement of the particular quantity based upon the equipment available at the time of filing the application. As used herein, the term "substantially" and derivatives thereof, and words of similar import, when used to describe a size, shape, orientation, distance, spatial relationship, or other parameter includes the stated size, shape, orientation, distance, spatial relationship, or other parameter, and can also include a range up to 10% more and up to 10% less than the stated parameter, including 5% more and 5% less, including 3% more and 3% less, including 1% more and 1% less.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

The present invention provides, in accordance with the following clauses:
1. A child carrier system comprising:
   a child carrier including a carrying harness for connecting the child carrier to a caregiver's body;
   a cover attachable to the child carrier, the cover including a first coupling mechanism proximate a first lateral side of the cover and a second coupling mechanism proximate a second lateral side of the cover; and
   wherein each of the first coupling mechanism and the second coupling mechanism is extendable about a portion of the child carrier to attach the cover to the child carrier.
2. The child carrier system of clause 1, wherein the first coupling mechanism and the second coupling mechanism are extendable about the carrying harness of the child carrier to attach the cover to the child carrier.
3. The child carrier system of any preceding clause, wherein each of the first coupling mechanism and the second coupling mechanism includes:
   a receiver; and
   an attachment member, the attachment member being removably connectable to the receiver.
4. The child carrier system of clause 3, wherein the attachment member is connected to the cover by an extension member and the receiver is located at a position about the cover remote from the attachment member.
5. The child carrier system of clause 4, wherein the extension member has a horizontal orientation when the attachment member is coupled to the receiver.
6. The child carrier system of clause 4 or clause 5, wherein the extension member has a vertical orientation when the attachment member is coupled to the receiver.
7. The child carrier system of any of clauses 4 to 6, wherein an opening is defined between a body of the cover and the extension member when the attachment member is coupled to the receiver, the child carrier being positionable within the opening.
8. The child carrier system of clause 7, wherein the carrying harness includes at least one shoulder strap, the at least one shoulder strap being positionable within the opening.
9. The child carrier system of any preceding clause, wherein the carrying harness includes at least one shoulder strap and the child carrier further includes a child supporting part having a neck support portion, a torso support portion, and a hip support portion, wherein the at least one shoulder strap is connectable to the child supporting part.
10. The child carrier system of clause 9, wherein at least one of the first coupling mechanism and the second coupling mechanism is extendable about the at least one shoulder strap at a location proximate the torso support portion to attach the cover to the child carrier.
11. The child carrier system of clause 9 or clause 10, wherein at least one of the first coupling mechanism and the second coupling mechanism is extendable about the at least one shoulder strap at a location proximate the neck support portion to attach the cover to the child carrier.
12. The child carrier system of any preceding clause, wherein the cover includes a back and a front connected by the first lateral side and the second lateral side, the first coupling mechanism being arranged at an inward facing surface of the first lateral side, proximate an upper end of the back, and the second coupling mechanism being arranged at an inward facing surface of the second lateral side, proximate the upper end of the back.
13. The child carrier system of any preceding clause, wherein the cover includes a back and a front connected by the first lateral side and the second lateral side, the first coupling mechanism being arranged at an inward facing surface of the first lateral side, proximate an upper end of the front, and the second coupling mechanism being arranged at an inward facing surface of the second lateral side, proximate the upper end of the front.
14. The child carrier system of clause 13, further comprising a third coupling mechanism and a fourth coupling mechanism operable to couple the cover to the child carrier, the third coupling mechanism being located proximate the first coupling mechanism and the fourth coupling mechanism being located proximate the second coupling mechanism.
15. The child carrier system of clause 14, wherein the third coupling mechanism is arranged at an inward facing surface of the first lateral side, proximate an upper end of the back, and the fourth coupling mechanism is arranged at an inward facing surface of the second lateral side, proximate the upper end of the back.
16. The child carrier system of clause 14 or clause 15, wherein the first coupling mechanism and the second coupling mechanism are connectable to the carrying harness at a first location and the third coupling mechanism and the fourth coupling mechanism are connectable to the carrying harness at a location remote from the first location.
17. The child carrier system of any preceding clause, wherein the cover includes a storage pocket.
18. The child carrier system of any preceding clause, wherein the cover includes a pocket, the pocket having at least one opening arranged at a back of the cover for receiving a caregiver's hand.
19. The child carrier system of any preceding clause, wherein the cover includes a body formed from an insulative material, the body having a hollow interior, and the child carrier being positionable within the hollow interior.
20. A child supporting system comprising:
   a child supporting device including a child receiving area; and
   a cover including a coupling mechanism operable to removably connect the cover to the child supporting device at a position in overlapping arrangement with the child receiving area.
21. The child supporting system of clause 20, wherein the child supporting device is a child carrier wearable by a caregiver.
22. The child supporting system of clause 20 or clause 21, wherein the child supporting device is a child seat.
23. The child supporting system of any of clauses 20 to 22, wherein the child supporting device is a stroller.
24. The child supporting system of clause 23, wherein the coupling mechanism is operable to removably connect the cover to a frame of the stroller.
25. The child supporting system of clause 24, wherein the cover is removably connectable to at least one of the handle and a leg assembly of the stroller via the coupling mechanism.
26. The child supporting system of any of clauses 20 to 25, wherein the coupling mechanism is arranged at an upper end of the cover, the coupling mechanism including:
   an attachment member arranged at a first lateral side of the cover; and
   a receiver arranged at a second lateral side of the cover, the attachment member being connectable to the receiver.
27. The child supporting system of clause 25, wherein the attachment member is coupled to a first webbing portion and the receiving is coupled to a second webbing portion, the attachment member being connectable to the receiver at a location spaced from a body of the cover.
28. The child supporting system of clause 26, wherein the first webbing portion and the second webbing portion are integrally formed.
29. The child supporting system of any of clauses 20 to 28, wherein a bottom end of the cover includes a hem containing an elastic material.
30. The child supporting system of any of clauses 20 to 29, wherein the cover includes a closable storage pocket.
31. The child supporting system of clause 30, wherein the closable storage pocket is removably connectable to an inward facing surface of the cover.
32. The child supporting system of any of clauses 20 to 31, wherein the cover includes a pocket, the pocket having at least one opening arranged at a back of the cover for receiving a caregiver's hand.

## Claims

1. A child carrier system comprising:
a child carrier including a carrying harness for connecting the child carrier to a caregiver's body;
a cover attachable to the child carrier, the cover including a first coupling mechanism proximate a first lateral side of the cover and a second coupling mechanism proximate a second lateral side of the cover; and
wherein each of the first coupling mechanism and the second coupling mechanism is extendable about a portion of the child carrier to attach the cover to the child carrier.

2. The child carrier system of claim 1, wherein the first coupling mechanism and the second coupling mechanism are extendable about the carrying harness of the child carrier to attach the cover to the child carrier.

3. The child carrier system of claim 1 or claim 2, wherein each of the first coupling mechanism and the second coupling mechanism includes:
a receiver; and
an attachment member, the attachment member being removably connectable to the receiver.

4. The child carrier system of claim 3, wherein the attachment member is connected to the cover by an extension member and the receiver is located at a position about the cover remote from the attachment member.

5. The child carrier system of claim 4, wherein:
the extension member has a horizontal orientation when the attachment member is coupled to the receiver; and/or
the extension member has a vertical orientation when the attachment member is coupled to the receiver

6. The child carrier system of claim 4 or claim 5, wherein an opening is defined between a body of the cover and the extension member when the attachment member is coupled to the receiver, the child carrier being positionable within the opening.

7. The child carrier system of claim 6, wherein the carrying harness includes at least one shoulder strap, the at least one shoulder strap being positionable within the opening.

8. The child carrier system of any preceding claim, wherein the carrying harness includes at least one shoulder strap and the child carrier further includes a child supporting part having a neck support portion, a torso support portion, and a hip support portion, wherein the at least one shoulder strap is connectable to the child supporting part.

9. The child carrier system of claim 9, wherein:
at least one of the first coupling mechanism and the second coupling mechanism is extendable about the at least one shoulder strap at a location proximate the torso support portion to attach the cover to the child carrier; and/or
at least one of the first coupling mechanism and the second coupling mechanism is extendable about the at least one shoulder strap at a location proximate the neck support portion to attach the cover to the child carrier.

10. The child carrier system of any preceding claim, wherein the cover includes a back and a front connected by the first lateral side and the second lateral side, the first coupling mechanism being arranged at an inward facing surface of the first lateral side, proximate an upper end of the back, and the second coupling mechanism being arranged at an inward facing surface of the second lateral side, proximate the upper end of the back.

11. The child carrier system of any preceding claim, wherein the cover includes a back and a front connected by the first lateral side and the second lateral side, the first coupling mechanism being arranged at an inward facing surface of the first lateral side, proximate an upper end of the front, and the second coupling mechanism being arranged at an inward facing surface of the second lateral side, proximate the upper end of the front.

12. The child carrier system of claim 11, further comprising a third coupling mechanism and a fourth coupling mechanism operable to couple the cover to the child carrier, the third coupling mechanism being located proximate the first coupling mechanism and the fourth coupling mechanism being located proximate the second coupling mechanism.

13. The child carrier system of claim 12, wherein:
the third coupling mechanism is arranged at an inward facing surface of the first lateral side, proximate an upper end of the back, and the fourth coupling mechanism is arranged at an inward facing surface of the second lateral side, proximate the upper end of the back; and/or
the first coupling mechanism and the second coupling mechanism are connectable to the carrying harness at a first location and the third coupling mechanism and the fourth coupling mechanism are connectable to the carrying harness at a location remote from the first location.

14. The child carrier system of any preceding claim, wherein:
the cover includes a storage pocket;
the cover includes a pocket, the pocket having at least one opening arranged at a back of the cover for receiving a caregiver's hand; and/or
the cover includes a body formed from an insulative material, the body having a hollow interior, and the child carrier being positionable within the hollow interior.

15. A child supporting system comprising:
a child supporting device including a child receiving area; and
a cover including a coupling mechanism operable to removably connect the cover to the child supporting device at a position in overlapping arrangement with the child receiving area.
